# EUROPEAN PATENT SPECIFICATION

(11) **EP 2 613 172 B1**
(45) Date of publication and mention of the grant of the patent: **21.03.2018**
(21) Application number: 11821394.1
(22) Date of filing: 17.06.2011
(51) Int. Cl.: G01S 7/527, G01S 15/93

(54) **CORRECTION PROCESSING DEVICE FOR ULTRASOUND DETECTOR, CORRECTION PROCESSING METHOD, AND OBSTACLE DETECTOR FOR VEHICLE**
KORREKTURVERARBEITUNGSVORRICHTUNG FÜR EINEN ULTRASCHALLDETEKTOR, KORREKTURVERARBEITUNGSVERFAHREN UND HINDERNISDETEKTOR FÜR FAHRZEUGE
DISPOSITIF DE TRAITEMENT DE CORRECTION POUR DÉTECTEUR ULTRASONORE, PROCÉDÉ DE TRAITEMENT DE CORRECTION ET DÉTECTEUR D'OBSTACLE POUR VÉHICULE

(30) Priority: 01.09.2010 JP 2010195700
(43) Date of publication of application: 10.07.2013
(73) Proprietor: Robert Bosch GmbH, 70469 Stuttgart (DE)
(72) Inventor: OESTERLE Florian, Yokohama-shi Kanagawa 224-8501 (JP); KALLER Jochen, Yokohama-shi Kanagawa 224-8501 (JP)
(74) Representative: DREISS Patentanwälte PartG mbB
(86) International application number: PCT/JP2011/063872
(87) International publication number: WO 2012/029376

(56) References cited:
- DE-A1- 19 707 651
- DE-A1-102008 054 047
- JP-A- 3 118 495
- JP-A- 3 118 495
- JP-A- 8 201 514
- JP-A- 58 189 571
- JP-A- 62 049 280
- JP-U- 59 085 976
- US-A1- 2010 071 471
- US-A1- 2010 076 710

## Description

### TECHNICAL FIELD

The present invention relates to an ultrasonic detection system calibration processing unit and calibration processing method, and an in-vehicle obstacle detection system equipped with the calibration processing unit, for performing calibration processing of an ultrasonic detection system that converts, with a receiving element, reflected waves of ultrasonic waves transmitted from a transmitting element into reception signals and in which computational processing of distance information to a detection subject is performed using the reception signals.

### BACKGROUND ART

Conventionally, a variety of ultrasonic detection systems equipped with an ultrasonic sensor and a computational processing unit that performs computational processing using reception signals of the ultrasonic sensor, like obstacle detection systems installed in vehicles, have been known. This kind of ultrasonic detection system is configured to receive, with a receiving element of the ultrasonic sensor, reflected waves of ultrasonic waves transmitted from a transmitting element of the ultrasonic sensor, convert the reflected waves into reception signals corresponding to the intensity of the reflected waves, output the reception signals, and perform computational processing of distance information to a detection subject using the reception signal groups that have been output.

Ultrasonic waves have the property that their sound pressure attenuates due to changes in environmental conditions such as ambient temperature and humidity. For that reason, in order to make the results of computation by the ultrasonic detection system accurate, it is necessary to consider changes in ambient environmental conditions.

For example, there has been proposed an ultrasonic sensor configured to prevent a drop in the efficiency of the transmission of the ultrasonic waves caused by temperature. This ultrasonic sensor includes a temperature-sensitive element that detects the ambient temperature of a vibration transmitting member and is configured in such a way that a drive signal generator generates drive signals corresponding to output signals of the temperature-sensitive element. According to this ultrasonic sensor, even if the Young's modulus of the vibration transmitting member changes and the resonance frequency changes in accordance with temperature, drive signals corresponding to the resonance frequency of the vibration transmitting member are applied to a transmission vibrator, and a drop in transmission efficiency caused by temperature can be prevented (see PTL 1).

Further, there has also been proposed an ultrasonic sensor device configured to be able to solve the problem of degradation in detection precision caused by the adhesion of water droplets and dirt and changes in humidity. This ultrasonic sensor device is configured as a result of one or more transmitting elements and two or more receiving elements being integrated on the same substrate, is configured in such a way that the transmitting element transmits ultrasonic waves of two or more different frequencies, and has a humidity correcting function. According to this ultrasonic sensor device, an ultrasonic sensor device that is low-cost and can cope with degradation in detection precision caused by changes in humidity can be obtained (see PTL 2).

Moreover, there has also been proposed an ultrasonic sensor configured to be able to suppress a drop in detection precision caused by changes in humidity. This ultrasonic sensor detects the reception of ultrasonic waves by a receiving element in a case where the output voltage that is output from a piezoelectric element configuring the receiving element is equal to or greater than a threshold value, and the ultrasonic sensor is configured to compute, on the basis of a humidity computed by humidity computational processing, the sound pressure of the ultrasonic waves when they have propagated over a propagation distance and adjust the threshold value in such a way as to lower the threshold value in a case where a minimum output voltage found from this sound pressure is smaller than a value obtained by multiplying the threshold value by a coefficient (see PTL 3).

### CITATION LIST

### PATENT LITERATURE

PTL 1: JP-A-2007-183185
PTL 2: JP-A-2006-242650
PTL 3: JP-A-2009-257978

### SUMMARY OF INVENTION

### TECHNICAL PROBLEM

The ultrasonic sensor described in PTL 1 is configured in such a way that drive signals corresponding to temperature are generated, but because the sound pressure of ultrasonic waves tends to attenuate more because of the effect of humidity than temperature, there is the concern that the measures will become insufficient.

On the other hand, the ultrasonic sensor devices described in PTL 2 and PTL 3 attempt to handle changes in humidity without the use of a humidity sensor, but in the ultrasonic sensor device of PTL 2, it is necessary to transmit ultrasonic waves of a number of different frequencies, it is also necessary to use plural receiving elements, and hence there is the concern that this will lead to an increase in the size of the ultrasonic sensor and an increase in cost. Further, the ultrasonic sensor of PTL 3 is configured to estimate the humidity using a complex computing equation, and computing precision and the processing capacity of a control device are required.

Further, the ultrasonic sensor devices described in PTL 2 and PTL 3 are both configured in such a way that correction is performed in accordance with changes in humidity, but in the case of attempting to also consider the effects of temperature, it is necessary to incorporate a separate computing equation for temperature correction. If calibration could be performed in such a way as to be inclusive of both the effects of temperature and the effects of humidity, it would be simple and advantageous as a method of calibration.

JP 3 118495A discloses an ultrasonic wave transceiver measuring an ultrasonic wave reflected from an object as an electric signal. The signal is amplified to a detectable level. The amplified signal is converted to an envelope signal and compared with a threshold value. The threshold value is gradually decreased to discriminate waves reflected from a liquid surface an obstacle and the like and noises. In situations where during the execution of the calibration processing the distance to the detection subject changes the calibration is not accurate.

Thus, after a great deal of intensive investigation, the inventors of the invention discovered that this problem can be solved by an ultrasonic detection system calibration processing unit and calibration processing method and an in-vehicle obstacle detection system according to the independent claims.

### SOLUTION TO PROBLEM

According to the invention, there is provided an ultrasonic detection system calibration processing unit that performs calibration processing of an ultrasonic detection system having a transmitting element that transmits ultrasonic waves and a receiving element that receives reflected waves of the ultrasonic waves transmitted from the transmitting element and converts the reflected waves into reception signals corresponding to the intensity of the reflected waves and in which computational processing of distance information to a detection subject is performed using the reception signals, the ultrasonic detection system calibration processing unit comprising: distance information computing means that performs computational processing of the distance information using, among reception signal groups that are output, reception signals equal to or greater than a predetermined reference threshold value; calibration data acquiring means that acquires data of computational results of the distance information found using, among reception signal groups that are output in a state in which ultrasonic waves are being reflected by a predetermined detection subject, reception signals equal to or greater than a predetermined decision threshold value, with the calibration data acquiring means changing the decision threshold value and acquiring the data in regard to each of the decision threshold values; boundary value discriminating means that discriminates, from among the decision threshold values and on the basis of data groups of the computational results that have been acquired, a boundary value between a state in which the detection subject can be stably recognized and a state in which the detection subject cannot be stably recognized; and reference threshold value adjusting means that adjusts, on the basis of the boundary value that has been discriminated, the reference threshold value used when performing the computational processing of the distance information, wherein the ultrasonic detection system is an in-vehicle obstacle detection system, with at least the acquisition of the data by the calibration data acquiring means being executed in a state in which the vehicle is stopped, whereby the above-described problem can be solved.

Further, in configuring the ultrasonic detection system calibration processing unit of the invention, it is preferred that the boundary value discriminating means find, on the basis of the data groups of the computational results, a first boundary value that is a boundary value between a state in which the detection subject is being recognized and a state in which the detection subject is not being recognized.

Further, in configuring the ultrasonic detection system calibration processing unit of the invention, it is preferred that the boundary value discriminating means find, on the basis of the data groups of the computational results, a second boundary value that is a boundary value between a state in which the detection subject is being recognized and a state in which the detection subject is being recognized but a lot of noise is included.

Further, in configuring the ultrasonic detection system calibration processing unit of the invention, it is preferred that the reference threshold value adjusting means set, to the reference threshold value, an average value of the first boundary value and the second boundary value.

Further, in configuring the ultrasonic detection system calibration processing unit of the invention, it is preferred that the reference threshold value adjusting means set, to the reference threshold value, a value obtained by adding or subtracting a predetermined value to or from the first boundary value or the second boundary value or a value obtained by multiplying or dividing the first boundary value or the second boundary value by a predetermined coefficient.

Further, in configuring the ultrasonic detection system calibration processing unit of the invention, it is preferred that the calibration data acquiring means cancel the acquisition of the data when a predetermined amount of time has elapsed since the start of the acquisition of the data or when the outside air temperature has risen a predetermined value or more.

Further, in configuring the ultrasonic detection system calibration processing unit of the invention, it is preferred that the calibration data acquiring means acquire the data of the computational results which have been filtered by a low-pass filter.

Further, in configuring the ultrasonic detection system calibration processing unit of the invention, it is preferred that the calibration
processing unit cancel the acquisition of the data when the distance from the vehicle to the detection subject has changed.

Further, another aspect of the invent ion is an ultrasonic detection system calibration processing method that automatically performs calibration processing of an ultrasonic detection system having a transmitting element that transmits ultrasonic waves and a receiving element that receives reflected waves of the ultrasonic waves transmitted from the transmitting element and converts the reflected waves into reception signals corresponding to the intensity of the reflected waves and in which computational processing of distance information to a detection subject is performed using the reception signals, the ultrasonic detection system calibration processing method comprising: acquiring data of computational results of the distance information found using, among reception signal groups that are output in a state in which ultrasonic waves are being reflected by a predetermined detection subject, reception signals equal to or greater than a predetermined decision threshold value, with the method changing the decision threshold value and acquiring the data in regard to each of the decision threshold values;
discriminating, from among the decision threshold values and on the basis of data groups of the computational results that have been acquired, a boundary value between a state in which the detection subject can be stably recognized and a state in which the detection subject cannot be stably recognized; and adjusting, on the basis of the boundary value that has been discriminated, the reference threshold value used when performing the computational processing of the distance information, wherein the ultrasonic detection system is an in-vehicle obstacle detection system, with at least the acquisition of the data by the calibration data acquiring means being executed in a state in which the vehicle is stopped.

Further, still another aspect of the invention is an
in-vehicle obstacle detection system equipped with any one of the ultrasonic detection system calibration processing units described above.

### ADVANTAGEOUS EFFECTS OF INVENTION

According to the ultrasonic detection system calibration processing unit and calibration processing method and the in-vehicle obstacle detection system of the invention,
predetermined computational processing is performed for each of the plural decision threshold values using the reception signal groups that are output from the receiving element in
a state in which the distance between the ultrasonic sensor and the detection subject is constant, and the reference threshold value used at the time of the computational processing of the distance information is automatically adjusted on the basis of the data groups of the computational results. Consequently, the reference threshold value for distinguishing, from among the reception signal groups that are output from the receiving element, between the reception signals of the reflected waves reflected by the detection subject and noise is automatically adjusted in accordance with the environmental conditions such as temperature and humidity at those times. As a result, the precision of the computational processing of the distance information using the reception signal groups that are output from the receiving element can be improved.

### BRIEF DESCRIPTION OF DRAWINGS

FIG. 1 is a drawing showing the overall configuration of an obstacle detection system equipped with a calibration processing unit of an embodiment of the invention;
FIG. 2 is a chart showing waveforms of each part when detecting an obstacle;
FIG. 3 is a block diagram for describing the configuration of a computational processing unit;
FIG. 4 is a flowchart for describing a calibration processing method of the embodiment;
FIG. 5 is a flowchart for describing a method of acquiring calibration data;
FIG. 6 is a chart for describing statistical processing based on calibration data groups; and
FIG. 7 is a chart for describing statistical processing based on calibration data groups that have been filtered.

### DESCRIPTION OF EMBODIMENT

An embodiment relating to an ultrasonic detection system calibration processing unit and calibration processing method and an in-vehicle obstacle detection system of the invention will be specifically described below with reference to the drawings. However, the embodiment below represents one aspect of the invention, is not intended to limit this invention, and is capable of being arbitrarily changed in the scope of the invention. In each of the drawings, members to which the same reference signs have been given represent identical members, and description will be appropriately omitted.

### 1. Ultrasonic Detection System Calibration Processing Unit

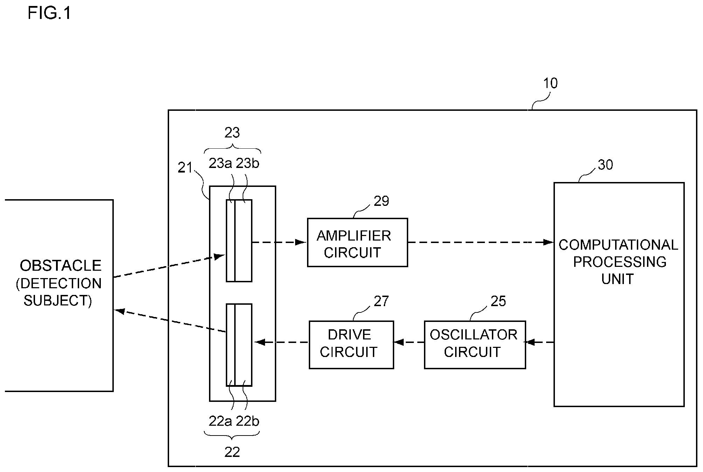

FIG. 1 shows an example of the overall configuration of an in-vehicle obstacle detection system 10 serving as an ultrasonic detection system equipped with a calibration processing unit pertaining to the embodiment of the invention. In the obstacle detection system 10, a computational processing unit 30 is configured to function as the calibration processing unit.

The obstacle detection system 10 is equipped with an ultrasonic sensor 21, which is disposed on the periphery of a vehicle such as on a bumper, and the computational processing unit 30, which reads signals that are output from the ultrasonic sensor 21 and performs computational processing. In the obstacle detection system 10, the computational processing unit 30 is basically configured to find information of a detection subject (obstacle) existing in the area around the vehicle on the basis of the signals that are output from the ultrasonic sensor 21.

The ultrasonic sensor 21 is equipped with a transmitting element 22, which transmits ultrasonic waves toward the outside of the vehicle, and a receiving element 23, which receives reflected waves of the ultrasonic waves transmitted from the transmitting element 22, converts the reflected waves into voltage signals, and outputs the voltage signals.

The transmitting element 22 is equipped with a transmission vibrating portion 22a, which transmits ultrasonic waves as a result of being vibrated, and a piezoelectric element 22b, which is in abutting contact with the transmission vibrating portion 22a and vibrates the transmission vibrating portion 22a. The piezoelectric element 22b vibrates the transmission vibrating portion 22a in pulses in accordance with voltage signals that are output from the computational processing unit 30 in a predetermined microcycle to cause the transmission vibrating portion 22a to transmit the ultrasonic waves. The sound pressure, frequency and the like of the ultrasonic waves that are transmitted are instructed by the voltage signals from the computational processing unit 30.

Further, the receiving element 23 is equipped with a reception vibrating portion 23a, which vibrates upon receiving reflected waves of the ultrasonic waves reflected by the detection subject, and a piezoelectric element 23b, which is in abutting contact with the reception vibrating portion 23a and converts the vibrations of the reception vibrating portion 23a into voltage signals. When the reception vibrating portion 23a receives the reflected waves and is vibrated, the piezoelectric element 23b outputs voltage signals corresponding to the vibrations of the reception vibrating portion 23a toward the computational processing unit 30.

The computational processing unit 30 is configured by an unillustrated CPU and RAM around a publicly known microcomputer. The computational processing unit 30 outputs drive instruction signals for the ultrasonic sensor 21 in a predetermined microcycle to an oscillator circuit 25. When the oscillator circuit 25 receives the drive instruction signals, the oscillator circuit 25 outputs pulse signals of a preset predetermined frequency to a drive circuit 27. Additionally, the drive circuit 27 drives the piezoelectric element 22b of the transmitting element 22 of the ultrasonic sensor 21 in accordance with the pulse signals from the oscillator circuit 25. As a result, the transmission vibrating portion 22a is vibrated by the piezoelectric element 22b, and the ultrasonic waves are transmitted.

Further, when the drive instruction signals are not being output from the computational processing unit 30, voltage signal groups that are output from the receiving element 23 of the ultrasonic sensor 21 are input via an amplifier circuit 29 to the computational processing unit 30. More than a little noise is included in the voltage signals that are output from the ultrasonic sensor 21. A representative example of noise is voltage signals of reflected waves diffusely reflected by the ground. For that reason, in order to distinguish between voltage signals of normal reflected waves reflected by the detection subject and noise, the computational processing unit 30 is configured to recognize, among the voltage signal groups that have been inputted, voltage signals larger than a reference threshold voltage as being reflected waves from the detection subject.

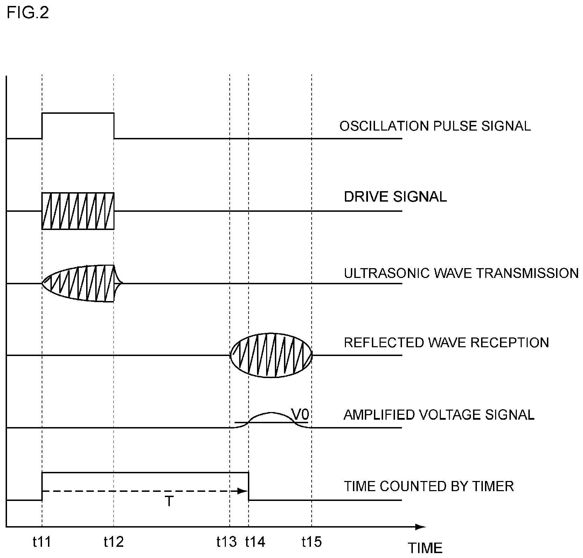

FIG. 2 shows waveforms of each part when detecting an obstacle with the obstacle detection system 10 configured in this way.

When pulse signals are output from the oscillator circuit 25 to the drive circuit 27 in the period from t11 to t12, the piezoelectric element 22b vibrates the transmission vibrating portion 22a because of the drive signals from the drive circuit 27, and ultrasonic waves are transmitted. When the ultrasonic waves are reflected by the detection subject, during the period from t13 to t15 the reflected waves are received by the receiving element 23 and are input to the computational processing unit 30 as amplified voltage signals. After the completion of the transmission of the ultrasonic waves, the detection subject is detected at the point in time of t14 when voltage signals equal to or greater than a reference threshold voltage vθ have been input, and the distance to the detection subject is estimated by computation on the basis of an amount of time T from t11, when the transmission of the ultrasonic waves was started, to t14, when the voltage signals equal to or greater than the reference threshold voltage vθ are input.

Here, the sound pressure of the ultrasonic waves attenuates due to environmental conditions such as ambient temperature and humidity, and the attenuation rate also differs depending on temperature and humidity, so the value of the reference threshold voltage vθ for distinguishing between the voltage signals of the normal reflected waves and noise differs depending on the ambient environment at that time. In the embodiment, the computational processing unit 30 is configured to be able to automatically execute calibration processing of the ultrasonic sensor 21 in such a way that a reference threshold voltage vθ corresponding to the ambient environment at that time is set.

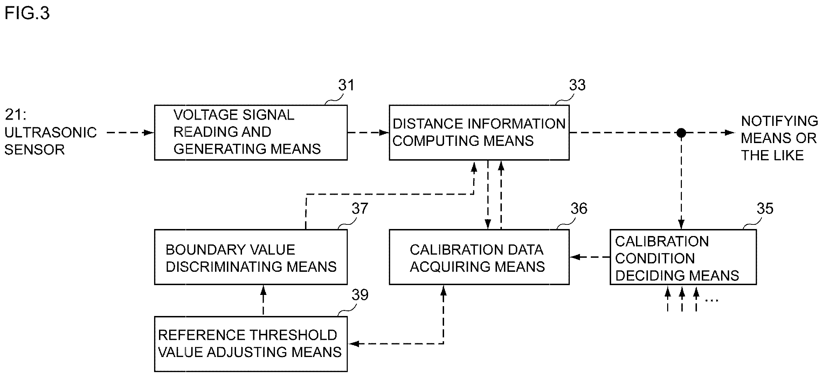

FIG. 3 is a drawing in which sections of the configuration of the computational processing unit 30 relating to the calibration processing of the ultrasonic sensor 21 are represented by functional blocks.

This computational processing unit 30 is configured to include voltage signal reading and generating means 31, distance information computing means 33, calibration condition deciding means 35, calibration data acquiring means 36, boundary value discriminating means 37, and reference threshold value adjusting means 39. The computational processing unit 30 is configured around a publicly known microcomputer, and each of the means is realized by the execution of a program by the microcomputer. Further, the computational processing unit 30 is equipped with storing means such as an unillustrated RAM (Random Access Memory), and the voltage signals that are output from the ultrasonic sensor 21 and computational results of each of the aforementioned means are stored in the storing means.

The voltage signal reading and generating means 31 is configured to read, into the computational processing unit 30, voltage signal groups Sv1, Sv2, and so on to Svx that are output from the ultrasonic sensor 21 and generate information of the voltage signals.

The distance information computing means 33 is configured to extract information of voltage signals equal to or greater than the reference threshold voltage vθ among the voltage signal groups Sv1, Sv2, and so on to Svx read by the voltage signal reading and generating means 31 and perform a computation of the distance to the detection subject using the extracted voltage signals. In a state in which the distance information computing means 33 is not in a calibration processing mode, the distance information computing means 33 is configured to output an instruction to issue a warning sound to notifying means or the like when it obtains the distance information to the detection subject. Conventionally publicly known methods can be employed as the specific method of computing the distance information, so specific description here will be omitted.

The calibration condition deciding means 35 is configured to detect the establishment of conditions for executing the calibration processing of the ultrasonic sensor 21. In the embodiment, the calibration conditioning deciding means 35 is configured to discriminate whether or not the proper detection subject is being recognized at a constant distance by the ultrasonic sensor 21 and whether or not other calibration environments are in place.

Whether or not the proper detection subject is being recognized at a constant distance is added to the conditions to ensure that the distance between the detection subject and the ultrasonic sensor 21 is maintained at a constant during the acquisition of the data for the calibration processing and to ensure that the calibration processing can be performed accurately. It is preferred that the detection subject at the time of the calibration processing be a detection subject that easily reflects the ultrasonic waves; for example, a utility pole is more suitable than a curb block located in a position close to the ground, and a bumper or the like of another vehicle is more suitable than a utility pole. The calibration condition deciding means 35 can be configured to discriminate this condition by, for example, whether or not more voltage signals of a relatively high level are included in the voltage signal group that is currently being output from the ultrasonic sensor 21.

Further, whether or not other calibration environments are established is added to the conditions so that the calibration processing is executed in a state in which there is no abnormality in the ultrasonic sensor 21 itself and no system error is occurring in the obstacle detection system 10. In addition to this, the fact that an environment on the vehicle side in which the detection subject can be appropriately measured-such as the vehicle speed being zero, that is, the fact that the vehicle is stopped, or the fact that the vehicle is not greatly tilting-is in place may also be included in the conditions of the calibration environments. By ensuring that the calibration processing is started in a state in which the vehicle is stopped, situations where the execution of the calibration processing is started in a state in which the vehicle is traveling, the calibration processing is reset each time the distance to the detection subject changes, and the computational processing needlessly repeated by the computational processing unit 30 can be reduced.

The calibration data acquiring means 36 performs an indication of a decision threshold value Thre_S/N serving as the reference threshold voltage vθ to be set with respect to the distance information computing means 33 while the establishment of the conditions for executing the calibration processing is being detected by the calibration condition deciding means 35. Further, the calibration data acquiring means 36 is configured to change the indicated value of the decision threshold value Thre_S/N, acquire data of results of computations of the distance information performed using each of the decision threshold values Thre_S/N as the reference threshold voltage vθ, and store the data in the storing means.

As for the decision threshold value Thre_S/N, plural decision threshold values Thre_S/N1, Thre_S/N2, and so on to Thre_S/Nn are set in a stepwise manner in such a way as to include the range of sound pressure capable of being received by the ultrasonic sensor 21. The calibration data acquiring means 36 is configured to acquire the data of the computational results while changing the decision threshold value Thre_S/N from a large value to a small value or from a small value to a large value. The calibration data acquiring means 36 may also be configured to randomly change the decision threshold value Thre_S/N provided that it is configured to be able to acquire the data of the computational results of all the decision threshold values Thre_S/N1, Thre_S/N2, and so on to Thre_S/Nn. The number and interval of the decision threshold values Thre_S/N to be set can be appropriately decided in accordance with the amount of time spent on the calibration processing and the required precision of the calibration processing results.

Further, the decision threshold value Thre_S/N is changed in such a way that plural groups of the computational results of the distance information are obtained for each of the decision threshold values Thre_S/N1, Thre_S/N2, and so on to Thre_S/Nn. For example, if the computational processing unit 30 performs, in a later step, a discrimination of the state of recognition of the detection subject based on the data of the computational results, the computational processing unit 30 can set the decision threshold value Thre_S/N in such a way as to change the decision threshold value Thre_S/N every predetermined amount of time. Or, if the computational processing unit 30 performs, in parallel, a discrimination of the state of recognition of the detection subject based on the data of the computational results, the computational processing unit 30 can set the decision threshold value Thre_S/N in such a way as to change the decision threshold value Thre_S/N at the point in time when that discrimination has become possible.

The boundary value discriminating means 37 is configured to perform data processing that discriminates a first boundary value ThreA and a second boundary value ThreB from among the decision threshold values Thre_S/N1, Thre_S/N2, and so on to Thre_S/Nn on the basis of the data groups of the computational results acquired by the calibration data acquiring means 36. The first boundary value ThreA is a decision threshold value Thre_S/N that becomes a boundary between whether or not the detection subject is being recognized in each computational result, and the second boundary value ThreB is a decision threshold value Thre_S/N that becomes a boundary between whether or not included noise is in an allowable range in a state in which the detection subject is being recognized.

Specifically, in a case where the decision threshold value Thre_S/N is too high, the voltage signals of the normal reflected waves tend to become removed in the computational processing of the distance information, and the detection subject cannot be recognized from the computational results. Consequently, the boundary value discriminating means 37 discriminates, and uses as the first boundary value ThreA, the largest decision threshold value Thre_S/N with which the distance information is stably obtained on the basis of the data groups of the computational results of the plural groups of the distance information obtained using each of the decision threshold values Thre_S/N1, Thre_S/N2, and so on to Thre_S/Nn as the reference threshold voltage vθ.

Further, in a case where the decision threshold value Thre_S/N is too low, noise outside the voltage signals of the normal reflected waves tends to also become used in the computational processing of the distance information, and the computational results become unstable and variations become larger. Consequently, the boundary value discriminating means 37 discriminates, and uses as the second boundary value ThreB, the smallest decision threshold value Thre_S/N with which the distance information is stably obtained on the basis of the data groups of the computational results of the plural groups of the distance information obtained using each of the decision threshold values Thre_S/N1, Thre_S/N2, and so on to Thre_S/Nn as the reference threshold voltage vθ.

For example, when the detection subject is not present, that is, when the ultrasonic sensor 21 cannot receive the reflected waves, the output values of the voltage signals that are output from the ultrasonic sensor 21 become zero. Further, the sound pressure of the normal reflected waves reflected by the detection subject attenuates in accordance with the ambient environment such as the temperature and humidity at that time, but the voltage signals that are output show a substantially constant value. Moreover, the voltage signals of the ultrasonic waves scattered by road surface reflection or the like show output values with variations in a range of a smaller value than the voltage signals of the normal reflected waves because the attenuation rate of the sound pressure becomes even higher and the attenuation rate also varies.

Consequently, in the computational processing using each of the decision threshold values Thre_S/N1, Thre_S/N2, and so on to Thre_S/Nn as the reference threshold voltage vθ, when the decision threshold value Thre_S/N is high enough that the majority of the voltage signals of the normal reflected waves are removed, the computational results of the distance information tend to show a maximum value Dmax. Further, when the decision threshold value Thre_S/N is a value close to the proper reference threshold voltage vθ, the computational results of the distance information tend to stably show values that are not the maximum value Dmax. At this time, the more the detection subject is a detection subject that easily reflects the ultrasonic waves, the higher the value shown by the values of the computational results of the distance information. Moreover, when the decision threshold value Thre_S/N is too low, the computation of the distance information is performed also including noise, so the computational results of the distance information tend to vary in the range of a smaller value than the actual distance to the detection subject.

On the basis of this, the boundary value discriminating means 37 discriminates, as the first boundary value ThreA and the second boundary value ThreB, respectively, the maximum value and the minimum value of the decision threshold value Thre_S/N with which the distance information to the detection subject is stably obtained, by statistically processing the calculated values and variations of the computational results of the distance information obtained for each of the decision threshold values Thre_S/N1, Thre_S/N2, and so on to Thre_S/Nn.

The discrimination of the first boundary value ThreA and the second boundary value ThreB by the boundary value discriminating means 36 may be executed after obtaining the data of the computational results of the distance information using all the decision threshold values Thre_S/N1, Thre_S/N2, and so on to Thre_S/Nn as the reference threshold voltage vθ or can also be executed by changing the decision threshold value Thre_S/N in a stepwise manner larger or smaller and each time comparing it with the data of the computational results resulting from the previous decision threshold value Thre_S/N.

The reference threshold value adjusting means 39 is configured to find by computation, on the basis of the first boundary value ThreA and the second boundary value ThreB obtained by the boundary value discriminating means 37, the reference threshold voltage vθ used in the computational processing of the distance information performed by the distance information computing means 33 at a time outside the calibration mode and apply an update. In the example of the embodiment, the reference threshold value adjusting means 39 is configured in such a way that an average value of the first boundary value ThreA and the second boundary value ThreB is found as the reference threshold voltage vθ.

However, the method of finding the reference threshold voltage vθ may also be a method other than this. For example, the reference threshold value adjusting means 39 can also use, as the reference threshold voltage vθ, a value obtained by adding or subtracting a predetermined value to or from the first boundary value ThreA or the second boundary value ThreB. Alternatively, the reference threshold value adjusting means 39 may also use, as the reference threshold voltage vθ, a value obtained by multiplying or dividing the first boundary value ThreA or the second boundary value ThreB by a predetermined coefficient. The setting of the reference threshold voltage vθ affects the computational results of the distance information computing means 33, so the method of finding the reference threshold voltage vθ based on the first boundary value ThreA and the second boundary value ThreB or either one can be set in accordance with the precision required of the computational results. Depending on the method of finding the reference threshold voltage vθ, either the first boundary value ThreA or the second boundary value ThreB found by the boundary value discriminating means 37 can also be omitted.

### 2. Ultrasonic Detection System Calibration Processing Method

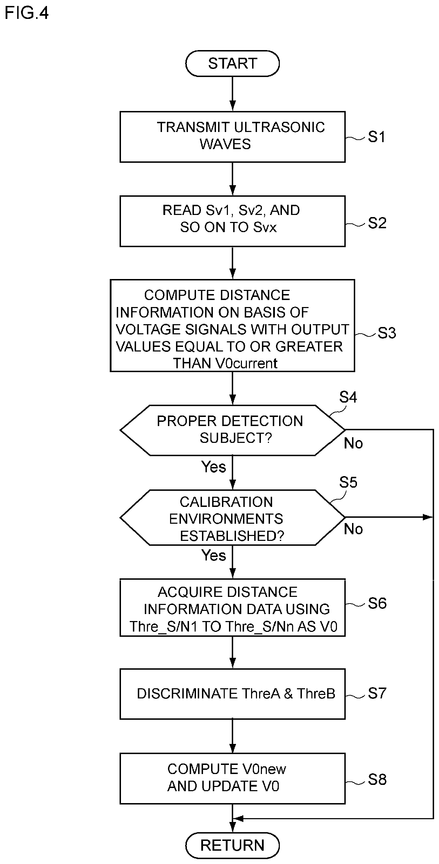

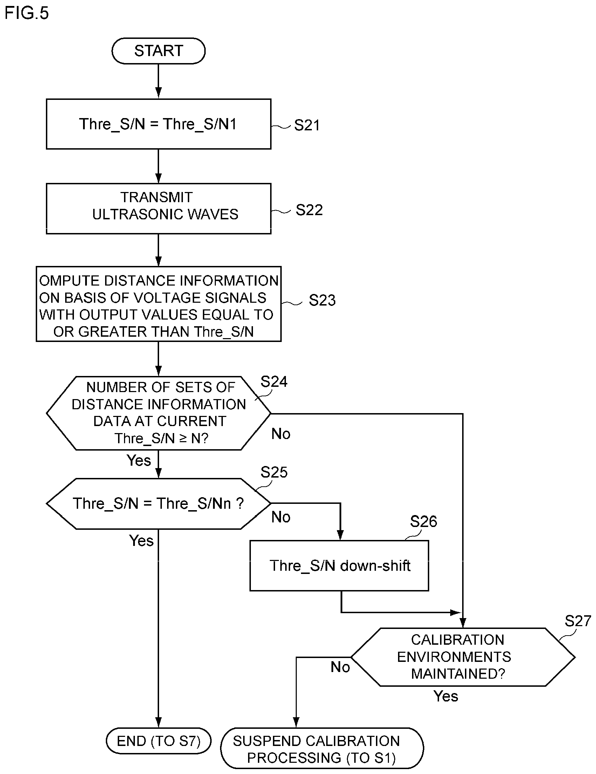

FIG. 4 and FIG. 5 show flowcharts for describing an example of an automatic calibration processing method for the obstacle detection system 10 executed by the computational processing unit 30 of the embodiment.

First, in step S1 of FIG. 4, the computational processing unit 30 transmits the ultrasonic waves in the predetermined microcycle from the ultrasonic sensor 21, and in step S2, the computational processing unit 30 reads the voltage signal groups Sv1, Sv2, and so on to Svx that are output from the ultrasonic sensor 21. Next, in step S3, the computational processing unit 30 computes the distance to the detection subject using, among the voltage signal groups Sv1, Sv2, and so on to Svx, voltage signals equal to or greater than the reference threshold voltage Vθcurrent in the normal mode that is set.

Next, in step S4, the computational processing unit 30 discriminates whether or not the detection subject is a detection subject suitable for calibration processing. In the embodiment, in step S4, the computational processing unit 30 is configured to discriminate whether or not the voltage signal groups Sv1, Sv2, and so on to Svx that are currently output from the ultrasonic sensor 21 include more voltage signals of a relatively high level. In a case where the detection subject is not a detection subject suitable for calibration processing (No), the computational processing unit 30 ends the present routine and returns to step S1, and in a case where the detection subject is a detection subject suitable for calibration processing (Yes), the computational processing unit 30 advances to step S5.

In step S5, the computational processing unit 30 discriminates whether or not the other calibration environments are in place. In the embodiment, in step S5, the computational processing unit 30 is configured to discriminate if an error signal is being output from the ultrasonic sensor 21, if a system error is occurring in the obstacle detection system 10, and if the vehicle speed is zero. In a case where these calibration environments are not in place (No), the computational processing unit 30 ends the present routine and returns to step S1, and in a case where the calibration environments are in place (Yes), the computational processing unit 30 advances to step S6 and acquires the data information for adjusting the reference threshold voltage Vθcurrent in the normal mode.

FIG. 5 is a flowchart showing a sub-routine that executes the acquisition of the data information performed in step S6. First, in step S21, the computational processing unit 30 sets, to the largest value Thre_S/N1, the decision threshold value Thre_S/N set as the reference threshold voltage vθ in the calibration mode, and thereafter, in step S22, the computational processing unit 30 transmits the ultrasonic waves in the predetermined microcycle from the ultrasonic sensor 21. Next, in step S23, the computational processing unit 30 computes the distance to the detection subject using, among the voltage signal groups Sv1, Sv2, and so on to Svx that are output from the ultrasonic sensor 21, voltage signals equal to or greater than the decision threshold value Thre_S/N.

Next, in step S24, it is discriminated whether or not the number of sets of data of the computational results of the distance information at the currently set decision threshold value Thre_S/N has become equal to or greater than a predetermined threshold value N. In a case where the number of sets of data has reached the threshold value N (Yes), the computational processing unit 30 advances to step S25, and in a case where the number of sets of data is less than the threshold value N (No), the computational processing unit 30 advances to step S27 and it is discriminated whether or not the calibration environments are being maintained.

The calibration environments at this time are discriminated in basically the same way as in step S5 of FIG. 4, but in order to prevent the attenuation rate of the ultrasonic waves from being affected by changes in the ambient environment and the calibration processing from becoming unable to be appropriately performed, whether or not the outside air temperature has risen a predetermined value or more or whether or not a predetermined amount of time or more has elapsed since the start of the acquisition of the data information may also be added to the conditions. For example, in a case where current stopped state of the vehicle is due to traffic congestion or the like, the ambient temperature tends to rise and there is the concern that the calibration processing will become unable to be appropriately performed. Moreover, the computational processing unit 30 may also be configured to calculate the distance to the detection subject using the currently set reference threshold voltage Vθcurrent in the normal mode and also discriminate whether the distance to the detection subject is being maintained.

In a case where the calibration environments are not being maintained (No), the calibration processing is suspended and the computational processing unit 30 returns to step S1 of FIG. 4. On the other hand, in a case where the calibration environments are being maintained (Yes), the computational processing unit 30 returns to step S22 and again performs a computation of the distance information at the current decision threshold value Thre_S/N.

In step S25, to which the computational processing unit 30 has advanced when in step S24 the number of sets of data of the computational results of the distance information at the currently set decision threshold value Thre_S/N has reached the threshold value N, the computational processing unit 30 discriminates whether or not the decision threshold value Thre_S/N is set to the lower limit value Thre_S/Nn. In a case where the decision threshold value Thre_S/N is not the lower limit value Thre_S/Nn (No), the computational processing unit 30 advances to step S26 and changes the decision threshold value Thre_S/N to a value one step smaller; thereafter, the computational processing unit 30 advances to step S27, and if the calibration environments are being maintained, the computational processing unit 30 returns to step S22 and repeats the same steps up to that point.

Step S22 to step S27 are repeated until data of the computational results of the distance information using all the decision threshold values Thre_S/N1, Thre_S/N2, and so on to Thre_S/Nn as the reference threshold voltage vθ are acquired. Then, when it is discriminated in step S25 that the decision threshold value Thre_S/N is set to the lower limit value Thre_S/Nn (Yes), the computational processing unit 30 ends this sub-routine and advances to step S7 of FIG. 4.

In step S7, the computational processing unit 30 executes statistical processing on the basis of the data groups of the computational results of the distance information acquired in step S6 and discriminates the predetermined first boundary value ThreA and second boundary value ThreB from among the decision threshold values Thre_S/N1, Thre_S/N2, and so on to Thre_S/Nn. When the first boundary value ThreA and the second boundary value ThreB are obtained, in step S8, the computational processing unit 30 finds, on the basis of the first boundary value ThreA and the second boundary value ThreB or either one boundary value, a proper value Vθnew of the reference threshold voltage Vθcurrent used when executing the computational processing in the normal mode and applies an update.

The reference threshold voltage Vθnew updated in this way is obtained as a proper value corresponding to the current environmental conditions such as the temperature and humidity, and in step S3 the results of the computation of the distance information of the detection subject executed using the updated reference threshold voltage Vθnew become precise.

### 3. Specific Example of Statistical Processing

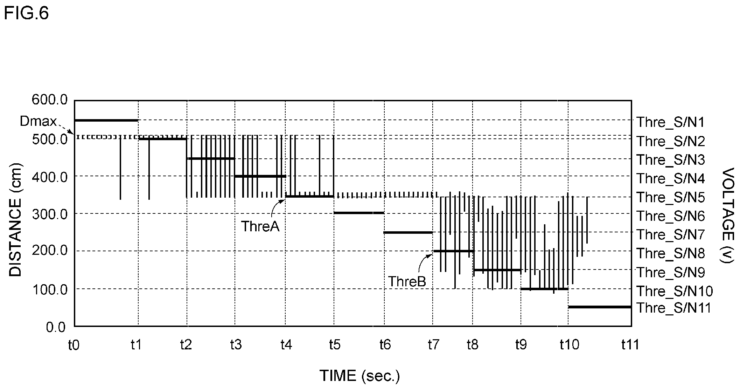

Next, a specific example of the statistical processing for obtaining the first boundary value ThreA and the second boundary value ThreB for finding the value Vθnew of the reference threshold voltage Vocurrent to be updated on the basis of the data groups of the computational results of the distance information obtained setting each of the decision threshold values Thre_S/N1, Thre_S/N2, and so on to Thre_S/Nn to the reference threshold voltage vθ will be specifically described with reference to FIG. 6.

In the chart of FIG. 6, the horizontal axis represents time (sec) and the vertical axis represents distance (cm) and voltage (v). FIG. 6 shows an example of executing the calibration processing while detecting, with the ultrasonic sensor 21, a pole existing in a position whose distance from the ultrasonic sensor 21 is 3.5 m. Further, the fat solid lines in FIG. 6 represent the decision threshold values Thre_S/N1, Thre_S/N2, and so on to Thre_S/Nn set to the reference threshold voltage vθ, and the value thereof is changed one step smaller at a time every predetermined period. Further, the narrow solid lines in FIG. 6 represent data of the results of the computation of the distance information performed using, among the voltage signal groups Sv1, Sv2, and so on to Svx that are output from the ultrasonic sensor 21 at each point in time, the voltage signals equal to or greater than the decision threshold value Thre_S/N set at that time.

First, the computational processing unit 30 sets the reference threshold voltage vθ to the largest decision threshold value Thre_S/N1 at t0 and performs a computation of the distance information on the basis of the voltage signals equal to or greater than the decision threshold value Thre_S/N1 among the voltage signal groups Sv1, Sv2, and so on to Svx that are output. This computation of the distance information using the decision threshold value Thre_S/N1 is repeatedly performed until the point in time of t1 when the reference threshold voltage vθ is changed to a value one step smaller. In this period from t0 to t1, the voltage signals of the normal reflected waves also become not used in the computation of the distance information, so the distance information that is calculated shows the maximum value Dmax representing a state in which the detection subject is not recognized.

In the next period from t1 to t2, the computational processing unit 30 sets the reference threshold voltage vθ to the decision threshold value Thre_S/N2 that is one step smaller and repeatedly performs a computation of the distance information. In this period from t1 to t2 also, nearly all the distance information that is calculated shows the maximum value Dmax, and it is discriminated that the detection subject is not being recognized.

In the next period from t2 to t3, the computational processing unit 30 sets the reference threshold voltage vθ to the decision threshold value Thre-S/N3 that is one step smaller still and repeatedly performs a computation of the distance information. In this period from t2 to t3 also, many maximum values Dmax are included in the distance information that is calculated, and it is discriminated that the detection subject is not being recognized.

In the next period from t3 to t4, the computational processing unit 30 sets the reference threshold voltage vθ to the decision threshold value Thre_S/N4 that is one step smaller still and repeatedly performs a computation of the distance information. In this period from t3 to t4 also, many maximum values Dmax are included in the distance information that is calculated, and in the setting of the discrimination of the embodiment, it is discriminated that the detection subject is not being recognized.

In the next period from t4 to t5, the computational processing unit 30 sets the reference threshold voltage vθ to the decision threshold value Thre_S/N5 that is one step smaller still and repeatedly performs a computation of the distance information. In this period from t4 to t5 also, the number of maximum values Dmax included in the distance information that is calculated decreases, and the values of the distance information start to stabilize. Consequently, it is discriminated that the detection subject starts to be recognized when the computational processing unit 30 set the reference threshold voltage vθ to this decision threshold value Thre_S/N5, and it is discriminated that this decision threshold value Thre_S/N5 is the first boundary value ThreA that is the boundary value between whether or not the detection subject is being recognized.

The value of the decision threshold value Thre_S/N decided as the first boundary value ThreA differs greatly depending on the shape of the detection subject. For example, in a case where the detection subject is not a pole but a detection subject that easily reflects the ultrasonic waves, like the bumper of a car, reflected waves whose level is high tend to become received, so the decision threshold value Thre_S/N decided as the first boundary value ThreA becomes a larger value.

In the next period from t5 to t6 and in the period from t6 to t7, the computational processing unit 30 reduces the reference threshold voltage vθ one step at a time and repeatedly performs a computation of the distance information, but during these periods the distance information that is calculated shows a constant value, and it is discriminated that the detection subject is being stably recognized.

In the next period from t7 to t8, the computational processing unit 30 sets the reference threshold voltage vθ to the decision threshold value Thre_S/N8 that is one step smaller and repeatedly performs a computation of the distance information. In this period from t7 to t8, the distance information that is calculated begins to exhibit variations and becomes unstable. For that reason, it is discriminated that a lot of noise has started to be included in the voltage signals that are output from the ultrasonic sensor 21, and this decision threshold value Thre_S/N8 is discriminated as the second boundary value ThreB that is the boundary value between whether or not noise is in an allowable range.

In the following period from t8 to t9 and in the period from t9 to 10, the computational processing unit 30 reduces the reference threshold voltage vθ one step at a time and repeatedly performs a computation of the distance information, but in these periods also, variations are seen in the distance information that is calculated, and it is discriminated that a lot of noise is included in the voltage signals. From t10, the reference threshold voltage vθ is set to the decision threshold value Thre_S/N11 and a computation of the distance information is performed, but because time is over, the computational processing unit 30 suspends the acquisition of the data of the computational results of the distance information midway.

In this way, by executing the computational processing of the distance information while changing the decision threshold value Thre_S/N serving as the set value of the reference threshold voltage vθ and statistically processing the data groups of the computational results, the predetermined first boundary value ThreA and second boundary value ThreB can be easily grasped. According to the example of FIG. 6, the distance information can be obtained accurately under the current ambient environment as a result of the updated reference threshold voltage Vθnew being set in the neighborhood of the range of Thre_S/N5 to Thre_S/N7.

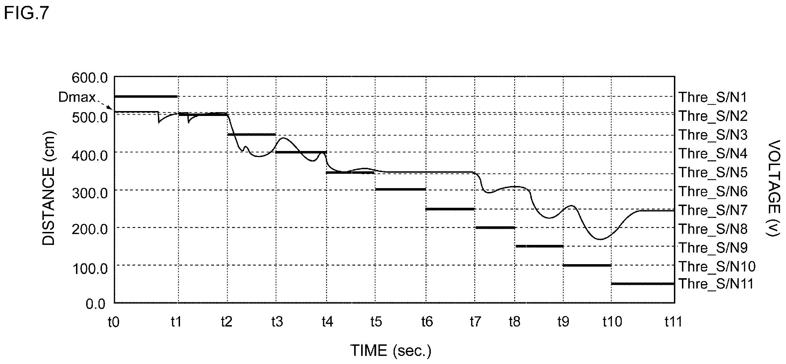

In the example of FIG. 6, the computational processing unit 30 uses as is the data of the distance information that is calculated to look at the variations and so forth in the distance information that is calculated, but the computational processing unit 30 may also discriminate the stability of the computational results using values obtained by filtering, with a low-pass filter, the data of the distance information that is calculated. For example, FIG. 7 shows values obtained by filtering the data of FIG. 6 with a low-pass filter. When the values are filtered, the transitions between the sets of the distance information that are calculated are taken as a smooth curved line, the calculations and so forth when discriminating the first boundary value ThreA or the second boundary value ThreB become easy, or it becomes possible to increase the variation in the setting of the calculation equations.

Further, in the embodiment, the calibration processing unit is configured by the computational processing unit 30 separate from the ultrasonic sensor 21, but the calibration processing unit can also be realized by an electronic circuit disposed in the ultrasonic sensor 21. Further, the calibration processing unit can also be configured by an electronic circuit disposed in the ultrasonic sensor 21 and the computational processing unit 30. Further, in the ultrasonic sensor 21 of the embodiment, the reception signals corresponding to the intensity of the reflected waves are output as voltage signals, but they may also be signal values other than this.

### REFERENCE SIGNS LIST

- 10: Obstacle Detection System
- 21: Ultrasonic Sensor
- 22: Transmitting Element
- 22a: Transmission Vibrating Portion
- 22b: Piezoelectric Element
- 23: Receiving Element
- 23a: Reception Vibrating Portion
- 23b: Piezoelectric Element
- 25: Oscillator Circuit
- 27: Drive Circuit
- 29: Amplifier Circuit
- 30: Computational Processing Unit (Calibration Processing Unit)
- 31: Voltage Signal Reading and Generating Means
- 33: Distance Information Computing Means
- 35: Calibration Condition Deciding Means
- 36: Calibration Data Acquiring Means
- 37: Boundary Value Discriminating Means
- 39: Reference Threshold Value Adjusting Means

## Claims

1. An ultrasonic detection system calibration processing unit (30) that performs calibration processing of an ultrasonic detection system (10) having a transmitting element (22) that transmits ultrasonic waves and a receiving element (23) that receives reflected waves of the ultrasonic waves transmitted from the transmitting element (22) and converts the reflected waves into reception signals corresponding to the intensity of the reflected waves and in which computational processing of distance information to a detection subject is performed using the reception signals, the ultrasonic detection system calibration processing unit comprising:
distance information computing means (33) that performs computational processing of the distance information using, among reception signal groups that are output, reception signals equal to or greater than a predetermined reference threshold value;
calibration data acquiring means (36) that acquires data of computational results of the distance information found using, among reception signal groups that are output in a state in which ultrasonic waves are being reflected by a predetermined detection subject, reception signals equal to or greater than a predetermined decision threshold value, with the calibration data acquiring means (36) changing the decision threshold value and acquiring the data in regard to each of the decision threshold values;
boundary value discriminating means (37) that discriminates, from among the decision threshold values and on the basis of data groups of the computational results that have been acquired, a boundary value between a state in which the detection subject can be stably recognized and a state in which the detection subject cannot be stably recognized; and
reference threshold value adjusting means (39) that adjusts, on the basis of the boundary value that has been discriminated, the reference threshold value used when performing the computational processing of the distance information.
**characterized in that**
the ultrasonic detection system (10) is an in-vehicle obstacle detection system (10), with at least the acquisition of the data by the calibration data acquiring means (36) being executed in a state in which the vehicle is stopped.

2. The ultrasonic detection system calibration processing unit (30) according to claim 1, wherein the boundary value discriminating means (37) finds, on the basis of the data groups of the computational results, a first boundary value that is a boundary value between a state in which the detection subject is being recognized and a state in which the detection subject is not being recognized.

3. The ultrasonic detection system calibration processing unit (30) according to claim 1 or 2, wherein the boundary value discriminating means (37) finds, on the basis of the data groups of the computational results, a second boundary value that is a boundary value between a state in which the detection subject is being recognized and a state in which the detection subject is being recognized but a lot of noise is included.

4. The ultrasonic detection system calibration processing unit (30) according to any one of claims 1 to 3, wherein the calibration data acquiring means (36) cancels the acquisition of the data when a predetermined amount of time has elapsed since the start of the acquisition of the data or when the outside air temperature has risen a predetermined value or more.

5. The ultrasonic detection system calibration processing unit (30) according to any one of claims 1 to 4, wherein the calibration data acquiring means (36) acquires the data of the computational results which have been filtered by a low-pass filter.

6. The ultrasonic detection system calibration processing unit (30) according to any one of claims 1 to 5, wherein the calibration processing unit (30) cancels the acquisition of the data when the distance from the vehicle to the detection subject has changed.

7. An ultrasonic detection system calibration processing method that automatically performs calibration processing of an ultrasonic detection system (10) having a transmitting element (22) that transmits ultrasonic waves and a receiving element (23) that receives reflected waves of the ultrasonic waves transmitted from the transmitting element (22) and converts the reflected waves into reception signals corresponding to the intensity of the reflected waves and in which computational processing of distance information to a detection subject is performed using the reception signals, the ultrasonic detection system calibration processing method comprising:
acquiring data of computational results of the distance information found using, among reception signal groups that are output in a state in which ultrasonic waves are being reflected by a predetermined detection subject, reception signals equal to or greater than a predetermined decision threshold value, with the method changing the decision threshold value and acquiring the data in regard to each of the decision threshold values;
discriminating, from among the decision threshold values and on the basis of data groups of the computational results that have been acquired, a boundary value between a state in which the detection subject can be stably recognized and a state in which the detection subject cannot be stably recognized; and
adjusting, on the basis of the boundary value that has been discriminated, the reference threshold value used when performing the computational processing of the distance information
**characterized in that**
the ultrasonic detection system (10) is an in-vehicle obstacle detection system, with at least the acquisition of the data by a calibration data acquiring means (36) being executed in a state in which the vehicle is stopped..

8. An in-vehicle obstacle detection system comprising the ultrasonic detection system calibration processing unit according to any one of claims 1 to 6.

## Patentansprüche

1. Ultraschalldetektionssystem-Kalibrierverarbeitungseinheit (30), die eine Kalibrierverarbeitung eines Ultraschalldetektionssystems (10), das ein Sendeelement (22), das Ultraschallwellen sendet, und ein Empfangselement (23), das reflektierte Wellen der von dem Sendeelement (22) gesendeten Ultraschallwellen empfängt, besitzt, das die reflektierten Wellen in Empfangssignale, die der Intensität der reflektierten Wellen entsprechen, umsetzt und in dem eine Rechenverarbeitung von Abstandsinformationen zu einem Detektionsgegenstand unter Verwendung der Empfangssignale durchgeführt wird, durchführt, wobei die Ultraschalldetektionssystem-Kalibrierverarbeitungseinheit Folgendes umfasst:
Abstandsinformationsberechnungsmittel (33), die eine Rechenverarbeitung der Abstandsinformationen durchführen und dabei unter ausgegebenen Empfangssignalgruppen Empfangssignale verwenden, die gleich oder größer als ein vorgegebener Referenzschwellenwert sind;
Kalibrierdatenerfassungsmittel (36), die Daten von Berechnungsergebnissen der Abstandsinformationen erfassen und gefunden werden, indem unter Empfangssignalgruppen, die in einem Zustand ausgegeben werden, in dem Ultraschallwellen von einem vorgegebenen Detektionsgegenstand reflektiert werden, Empfangssignale, die gleich oder größer als ein vorgegebener Entscheidungsschwellenwert sind, verwendet werden, wobei die Kalibrierdatenerfassungsmittel (36) den Entscheidungsschwellenwert ändern und die Daten hinsichtlich jedes der Entscheidungsschwellenwerte erfassen;
Grenzwertunterscheidungsmittel (37), die aus den Entscheidungsschwellenwerten und auf der Grundlage von Datengruppen der Berechnungsergebnisse, die erfasst wurden, einen Grenzwert zwischen einem Zustand, in dem der Detektionsgegenstand stabil erkannt werden kann, und einem Zustand, in dem der Detektionsgegenstand nicht stabil erkannt werden kann, unterscheiden; und
Referenzschwellenwertanpassmittel (39), die auf der Grundlage des Grenzwertes, der unterschieden wurde, den Referenzschwellenwert, der während des Durchführens der Rechenverarbeitung der Abstandsinformationen verwendet wird, anpassen,
**dadurch gekennzeichnet, dass**
das Ultraschalldetektionssystem (10) ein bordinternes Hindernisdetektionssystem (10) ist, wobei mindestens die Erfassung der Daten durch die Kalibrierdatenerfassungsmittel (36) in einem Zustand ausgeführt wird, in dem das Fahrzeug gestoppt ist.

2. Ultraschalldetektionssystem-Kalibrierverarbeitungseinheit (30) nach Anspruch 1, wobei die Grenzwertunterscheidungsmittel (37) auf der Grundlage der Datengruppen der Berechnungsergebnisse einen ersten Grenzwert finden, der ein Grenzwert zwischen einem Zustand, in dem der Detektionsgegenstand erkannt wird, und einem Zustand, in dem der Detektionsgegenstand nicht erkannt wird, ist.

3. Ultraschalldetektionssystem-Kalibrierverarbeitungseinheit (30) nach Anspruch 1 oder 2, wobei die Grenzwertunterscheidungsmittel (37) auf der Grundlage der Datengruppen der Berechnungsergebnisse einen zweiten Grenzwert finden, der ein Grenzwert zwischen einem Zustand, in dem der Detektionsgegenstand erkannt wird, und einem Zustand, in dem der Detektionsgegenstand erkannt wird, aber viel Rauschen enthalten ist, ist.

4. Ultraschalldetektionssystem-Kalibrierverarbeitungseinheit (30) nach einem der Ansprüche 1 bis 3, wobei die Kalibrierdatenerfassungsmittel (36) die Erfassung der Daten abbrechen, wenn ein vorgegebener Zeitraum seit dem Beginn der Datenerfassung verstrichen ist, oder wenn die Außenlufttemperatur um einen vorgegebenen Wert oder mehr gestiegen ist.

5. Ultraschalldetektionssystem-Kalibrierverarbeitungseinheit (30) nach einem der Ansprüche 1 bis 4, wobei die Kalibrierdatenerfassungsmittel (36) die Daten der Berechnungsergebnisse, die durch ein Tiefpassfilter gefiltert wurden, erfassen.

6. Ultraschalldetektionssystem-Kalibrierverarbeitungseinheit (30) nach einem der Ansprüche 1 bis 5, wobei die Kalibrierverarbeitungseinheit (30) die Erfassung der Daten abbricht, wenn sich der Abstand von dem Fahrzeug zu dem Detektionsgegenstand geändert hat.

7. Ultraschalldetektionssystem-Kalibrierverarbeitungsverfahren, das automatisch eine Kalibrierverarbeitung eines Ultraschalldetektionssystems (10), das ein Sendeelement (22), das Ultraschallwellen sendet, und ein Empfangselement (23), das reflektierte Wellen der von dem Sendeelement (22) gesendeten Ultraschallwellen empfängt, besitzt, das die reflektierten Wellen in Empfangssignale, die der Intensität der reflektierten Wellen entsprechen, umsetzt und in dem eine Rechenverarbeitung von Abstandsinformationen zu einem Detektionsgegenstand unter Verwendung der Empfangssignale durchgeführt wird, durchführt, wobei das Ultraschalldetektionssystem-Kalibrierverarbeitungsverfahren Folgendes umfasst:
Erfassen von Daten von Berechnungsergebnissen der Abstandsinformationen, die gefunden werden, indem unter Empfangssignalgruppen, die in einem Zustand ausgegeben werden, in dem Ultraschallwellen von einem vorgegebenen Detektionsgegenstand reflektiert werden, Empfangssignale, die gleich oder größer als ein vorgegebener Entscheidungsschwellenwert, verwendet werden, wobei das Verfahren den Entscheidungsschwellenwert ändert und die Daten hinsichtlich jedes der Entscheidungsschwellenwerte erfasst;
Unterscheiden unter den Entscheidungsschwellenwerten und auf der Grundlage von Datengruppen der Berechnungsergebnisse, die erfasst wurden, eines Grenzwerts zwischen einem Zustand, in dem der Detektionsgegenstand stabil erkannt werden kann, und einem Zustand, in dem der Detektionsgegenstand nicht stabil erkannt werden kann; und
Anpassen auf der Grundlage des Grenzwertes, der unterschieden wurde, des Referenzschwellenwerts, der während des Durchführens der Rechenverarbeitung der Abstandsinformationen verwendet wird,
**dadurch gekennzeichnet, dass**
das Ultraschalldetektionssystem (10) ein bordinternes Hindernisdetektionssystem (10) ist, wobei mindestens die Erfassung der Daten durch das Kalibrierdatenerfassungsmittel (36) in einem Zustand ausgeführt wird, in dem das Fahrzeug gestoppt ist.

8. Bordinternes Hindernisdetektionssystem, das die Ultraschalldetektionssystem-Kalibrierverarbeitungseinheit nach einem der Ansprüche 1 bis 6 umfasst.

## Revendications

1. Unité de calibrage d'un système de détection par ultrasons (30) qui effectue le calibrage d'un système de détection par ultrasons (10) comportant un élément de transmission (22) qui transmet des ondes ultrasonores et un élément de réception (23) qui reçoit les ondes réfléchies à partir des ondes ultrasonores transmises par l'élément de transmission (22) et transforme les ondes réfléchies en des signaux de réception correspondant à leur intensité, et, dans lequel un traitement par calcul de l'information de distance d'un objet détecté est effectué en utilisant les signaux de réception, l'unité de calibrage du système de détection par ultrasons comprenant :
des moyens de calcul d'information de distance (33) qui effectuent un traitement par calcul de l'information de distance en utilisant, parmi les groupes de signaux de réception qui sont délivrés en sortie, les signaux de réception égaux ou supérieurs à une valeur de seuil de référence prédéfinie,
des moyens d'acquisition de données de calibrage (36) qui acquièrent des données, à partir des résultats de calcul de l'information de distance trouvée en utilisant, parmi les groupes de signaux de réception qui sont délivrés en sortie dans un état dans lequel les ondes ultrasonores sont réfléchies par un objet détecté prédéfini, des signaux de réception égaux ou supérieurs à une valeur de seuil de décision prédéfinie, les moyens d'acquisition de données de calibrage (36) modifiant la valeur de seuil de la décision et acquérant les données en fonction de chacune des valeurs de seuil de décision,
des moyens de sélection de valeur limite (37), qui sélectionnent, parmi les valeurs de seuil de décision et sur le fondement de groupes de données des résultats de calcul qui ont été acquis, une valeur limite entre un état dans lequel l'objet détecté peut être identifié de façon sûre et un état dans lequel l'objet détecté ne peut pas être identifié de façon sûre, et
des moyens de réglage de la valeur de seuil de référence (39) qui règlent, sur le fondement de la valeur limite qui a été sélectionnée la valeur de seuil de référence utilisée lors de la mise en oeuvre du traitement par calcul de l'information de distance,
**caractérisé en ce que**
le système de détection par ultrasons (10) est un système de détection d'obstacles (10) embarqué dans un véhicule dans lequel au moins l'acquisition des données par les moyens d'acquisition de données, de calibrage (36) est mise en oeuvre dans un état dans lequel le véhicule est à l'arrêt.

2. Unité de calibrage de système de détection par ultrasons (30) conforme à la revendication 1, dans laquelle les moyens de sélection de la valeur limite (37), trouvent, sur le fondement de groupes de données du résultat de calcul, une première valeur limite qui est une valeur limite entre un état dans lequel l'objet détecté est identifié et un état dans lequel l'objet détecté n'est pas identifié.

3. Unité de calibrage d'un système de détection par ultrasons (30) conforme à la revendication 1 ou 2, dans laquelle les moyens de sélection de la valeur limite (37) trouvent sur le fondement des groupes de données des résultats du calcul une seconde valeur limite qui est une valeur limite entre un état dans lequel l'objet détecté est identifié et un état dans lequel l'objet détecté est identifié mais renferme un ensemble de bruits.

4. Unité de calibrage d'un système de détection par ultrasons (30) conforme à l'une quelconque des revendications 1 à 3, dans laquelle les moyens d'acquisition de données de calibrage (36) effacent l'acquisition des données lorsqu'une durée prédéterminée s'est écoulée depuis le début de l'acquisition des données ou lorsque la température de l'air externe a atteint une valeur prédéfinie ou une valeur supérieure à celle-ci.

5. Unité de traitement d'un système de détection par ultrasons (30) conforme à l'une quelconque des revendications 1 à 4, dans laquelle les moyens d'acquisition de données de calibrage (36) acquièrent des données des résultats de calcul qui ont été filtrées par un filtre passe-bas.

6. Unité de calibrage d'un système de détection par ultrasons (30) conforme à l'une quelconque des revendications 1 à 5, dans laquelle l'unité de calibrage (30) efface l'acquisition des données lorsque la distance du véhicule à l'objet détecté a varié.

7. Procédé de calibrage d'un système de détection par ultrasons qui met automatiquement en oeuvre un procédé de calibrage d'un système de détection par ultrasons (10) comportant un élément de transmission (22) qui transmet des ondes ultrasonores et un élément de réception (23) qui reçoit les ondes réfléchies, à partir des ondes ultrasonores transmises par l'élément de transmission (22) et transforme les ondes de réfléchies en des signaux de réception correspondant à leur intensité et dans lequel un traitement par calcul de l'information de distance d'un objet détecté est effectué en utilisant les signaux de réception, le procédé de calibrage du système de détection par ultrasons, comprenant des étapes consistant à :
acquérir des données à partir des résultats de calcul de l'information de distance trouvée en utilisant, parmi des groupes de signaux de réception qui ont été délivrés en sortie dans un état dans lequel les ondes ultrasonores ont été réfléchies par un objet détecté prédéfini, des signaux de réception égaux ou supérieurs à une valeur de seuil de décision prédéfinie, le procédé modifiant la valeur de seuil de la décision et acquérant les données en fonction de chacune des valeurs de seuil de décision,
sélectionner parmi les valeurs de seuil de décision et sur le fondement de groupes de données des résultats de calcul qui ont été acquis une valeur limite entre un état dans lequel l'objet détecté peut être identifié de façon sûre et un état dans lequel l'objet détecté ne peut pas être identifié de façon sûre, et
- régler sur le fondement de la valeur limite qui a été sectionnée, la valeur de seuil de référence utilisée lors de la mise en oeuvre du traitement par calcul de l'information de distance,
**caractérisé en ce que**
le système de détection par ultrasons (10) est un système de détection d'obstacles embarqué dans un véhicule, au moins l'acquisition des données par les moyens d'acquisition de données de calibrage (36) étant mise en oeuvre dans un état dans lequel le véhicule est à l'arrêt.

8. Système de détection d'obstacles embarqué dans un véhicule comprenant une unité de calibrage d'un système de détection par ultrasons conforme à la l'une quelconque des revendications 1 à 6.
